# EUROPEAN PATENT APPLICATION

(11) **EP 2 947 369 A1**
(43) Date of publication of application: **25.11.2015**
(21) Application number: 13871401.9
(22) Date of filing: 04.12.2013
(51) Int. Cl.: F16L 59/065, F16L 59/04

(54) **CORE MEMBER FOR VACUUM INSULATION MATERIAL INCLUDING GLASS FIBERS, MANUFACTURING METHOD THEREOF, AND VACUUM INSULATION MATERIAL USING SAME**

(30) Priority: 16.01.2013 KR 20130004775
(71) Applicant: LG Hausys, Ltd., Seoul 150-721 (KR)
(72) Inventor: LEE, Ju Hyung, Uiwang-si Gyeonggi-do 437-080 (KR); LEE, Myung, Gyeonggi-do 443-280 (KR); JUNG, Seong Moon, Daejeon 305-707 (KR); KIM, Eun Joo, Uiwang-si Gyeonggi-do 437-080 (KR); KIM, Hyun Jae, Seoul 151-775 (KR)
(74) Representative: Wynne-Jones, Laine and James LLP
(86) International application number: PCT/KR2013/011135
(87) International publication number: WO 2014/112718

(57) **Abstract**

Provided are a core material for vacuum insulation panel, comprising about 99% to about 100% by weight of a fiberglass and about 0% to 1% by weight of a carbonized binder, and a vacuum insulation panel comprising thereof. Further, provided is a method for manufacturing a core material for vacuum insulation panel, comprising: providing a fiberglass board, including a fiberglass with an average diameter of about 6 µm to about 10 µm; removing a binder by heat treating the fiberglass board; and removing the binder to form a core material for vacuum insulation panel comprising about 99% to about 100% by weight of a fiberglass and about 0% to 1% by weight of a carbonized binder.

## Description

### [Technical Field]

The present disclosure relates to a core material for vacuum insulation panel, a method for manufacturing thereof, and a vacuum insulation panel using the same.

### [Background Art]

A vacuum insulation panel is generally manufactured by receiving a continuous rigid cellular plastic foaming agent or an inorganic material as a core material in an encapsulant formed of a composite plastic laminate film exhibiting excellent gas barrier properties, reducing an inner pressure of the encapsulant, and heat-sealing stacked portions of gas barrier films along the circumference of the encapsulant.

An inorganic compound having low thermal conductivity and generating a small amount of gas is suitable for the core material of the vacuum insulation panel. In particular, a vacuum insulation panel having a fiberglass stacked body as a core material is known to exhibit excellent insulation. Therefore, there are continuing studies on the core material for the vacuum insulation panel.

### [Disclosure]

### [Technical Problem]

One aspect of the present disclosure is to provide a core material for vacuum insulation panel exhibiting an optimized thermal conductivity using an inexpensive fiberglass board for construction.

Another aspect of the present disclosure is to provide a method for manufacturing a core material for vacuum insulation panel.

Yet another aspect of the present disclosure is to provide a vacuum insulation panel comprising a core material for vacuum insulation panel.

### [Technical Solution]

In one aspect of the present disclosure, provided is a core material for vacuum insulation panel, comprising about 99% to about 100% by weight of a fiberglass and about 0% to 1% by weight of a carbonized binder.

According to some embodiments, the density of the fiberglass may be in a range of about 125kg/m³ to about 500 kg/m³.

According to some embodiments, the fiberglass may not comprise a binder.

According to some embodiments, the fiberglass may have an average diameter in a range of about 6 µm to about 10 µm.

According to some embodiments, the fiberglass may have a fiberglass content of vertical array higher than that of horizontal array.

In another aspect of the present disclosure, provided is a method for manufacturing a core material for vacuum insulation panel, comprising: providing a fiberglass board, including a fiberglass with an average diameter of about 6 µm to about 10 µm; removing a binder by heat treating the fiberglass board; and removing the binder to form a core material for vacuum insulation panel comprising about 99% to about 100% by weight of a fiberglass and about 0% to 1% by weight of a carbonized binder.

According to some embodiments, the density of the fiberglass after removing the binder may be in a range of about 125 kg/m³ to about 500 kg/m³.

According to some embodiments, the heat treating may be carried out by applying a press pressure of about 2.0 kg/cm² to about 2.4 kg/cm².

According to some embodiments, the heat treating may be carried out at a temperature of about 300°C to about 450°C.

In yet another aspect of the present disclosure, provided is a vacuum insulation panel comprising a core material for vacuum insulation panel.

According to some embodiments, the thermal conductivity of the vacuum insulation panel may be in a range of about 2.5 mW/mK to about 4.5 mW/mK.

### [Advantageous Effects]

According to the present disclosure, the core material for vacuum insulation panel is excellent in both initial thermal insulation performance and long term durability.

In addition, the present method for manufacturing a core material for vacuum insulation panel comprises a relatively simple process, whereby the vacuum insulation panel may offer price competitiveness, and there is a great advantage to obtain a low thermal conductivity.

The following is a detailed description of some embodiments of the present disclosure. However, these are presented by way of illustration and should not be construed as limiting the present disclosure, but instead the present disclosure will only be defined by the appended claims to be described later.

### [Best Mode]

### Core material for vacuum insulation panel

In one aspect of the present disclosure, provided is a core material for vacuum insulation panel, comprising about 99% to about 100% by weight of a fiberglass and about 0% to 1% by weight of a carbonized binder.

When manufacturing a core material for vacuum insulation panel using a fiberglass with a diameter of at least about 4 µm, since the fiberglass cannot but have a high volume during the manufacturing process, the density is very low. The fiberglass is therefore subjected to a thermal compression to press the volume of the fiberglass to at least about 60%. As used herein, the thermal compression refers to a method of bonding fiberglass together by applying a heat to a transformation temperature of the fiberglass (generally about 600°C). This would result in a higher initial capital investment and higher energy consumption during the maintenance. In this regard, a core material for vacuum insulation panel manufactured through the thermal compression is generally expensive.

Meanwhile, the core material for vacuum insulation panel may be prepared in the form of a mat or a board using a fiberglass having a diameter greater than or equal to about 6 µm and an organic binder. In this embodiment, the organic binder may be dried and compressed at a constant temperature without any particular heat source, thereby maintaining a lower cost, however, the use of the organic binder may produce organic gases in the vacuum little by little, lowering the degree of vacuum, thereby degrading the thermal insulation performance.

Thus, there appears a need for a method for manufacturing a core material for vacuum insulation panel comprising relatively simple processes and having an initial thermal insulation performance and long-term durability. The core material for vacuum insulation panel may be produced using a low-cost fiberglass board for construction, wherein the fiberglass board for construction, although a binder incorporated therein is removed, may contain a fiberglass having a predetermined density.

The core material for vacuum insulation panel typically comprises a binder and a fiberglass. When the binder is evaporated, the degree of the interior vacuum becomes lower, thereby rendering the core material difficult to use as a vacuum insulation panel. In this inventive core material for vacuum insulation panel, however, since a binder is removed through a heat treatment, although using a rough, low-cost fiberglass board for construction, a core material for vacuum insulation panel maintaining a constant density can be achieved.

According to some embodiments, the core material for vacuum insulation panel may include about 99% to about 100% by weight of a fiberglass and about 0% to about 1% by weight of a carbonized binder. The heat treatment under a predetermined condition can remove a binder such that about 0% by weight to about 1% by weight of a carbonized binder may be contained. As used herein, the term "carbonization" refers to a phenomenon that generates amorphous carbon by way of heat treating and pyrolysis of organic substances under appropriate conditions. In this embodiment, most of the binder is removed by carbonizing a fiberglass board for construction, such that the core material for vacuum insulation panel may include, together with about 99% to about 100% by weight of fiberglass, the carbonized binder in the afore-mentioned range at the same time.

Therefore, when the core material for vacuum insulation panel comprises about 99% to about 100% by weight of fiberglass and about 0% to about 1% by weight of carbonized binder at the same time, since the fiberglass content is higher than that of the conventional core material for vacuum insulation panel, a stable thermal conductivity may readily be obtained.

According to some embodiments, the core material for vacuum insulation panel may include a fiberglass having a density of about 125 kg/m³ to about 500 kg/m³. Although the conventional fiberglass are usually formed by compression with a binder, the fiberglass as used herein refers to a fiberglass in which a binder is removed from the conventional fiberglass, that is, fiberglass aggregates in which a binder is not contained. In this embodiment, the density indicates a mass per unit volume (1 m³), and the fiberglass can, despite not containing a binder, maintain a density of about 125 kg/m³ to about 500 kg/m³.

While the thickness of the core material for vacuum insulation panel may vary depending on the applications, the density of the fiberglass contained in the core material may be about 500 kg/m³ on the basis of the core material thickness of about 10 mm. For example, when at least three layers of a core material for vacuum insulation panel comprising a fiberglass having a density less than about 125 kg/m³ are used, there may be a problem with a skin material to use more than necessary in forming a vacuum insulation panel, while when the density is greater than about 500 kg/m³, density differences may occur over the distribution of the fiberglass.

The fiberglass can be derived from a fiberglass board for construction. The fiberglass board for construction has a larger diameter compared with a fiberglass used as core material for vacuum insulation panel, includes fiberglass having fibers not regularly arranged, and may be prepared by compressing the fiberglass with known binder.

Conventionally, the fiberglass board for construction is so cost-competitive, but it rendered difficult to ensure the thermal insulation performance and durability, and therefore could not be used as a vacuum insulation panel.

However, by removing a binder through a heat treatment of the fiberglass board for construction under predetermined conditions, even though the fiberglass has a reduced quality compared with that contained in the conventional core material for vacuum insulation panel, a fiberglass maintaining a constant density can be achieved, and further the core material for vacuum insulation panel containing a fiberglass having the constant content indicated above can produce both of the initial thermal insulation performance and the long term durability at the same time.

Therefore, the fiberglass can have cost competitiveness by virtue of being derived from a fiberglass board for construction, while at the same time maintaining the performance level of the conventional vacuum insulation panel.

According to some embodiments, the fiberglass may have an average diameter of about 6 µm to about 9 µm. The conventional fiberglass usually has an average diameter of about 3 µm to about 5 µm, but the fiberglass, even though derived from a fiberglass board for construction, having the average diameter in the above range, can be used as a core material for vacuum insulation panel having the initial thermal insulation performance and the long term durability.

As used herein, the term "basis weight" refers to the weight per unit area (1 m²) of paper expressed in unit of mass, i.e., gram, particularly indicating the weight per unit area (1 m²) of binder-free fiberglass wool. The thickness of a vacuum insulation panel comprising a core material may be determined by the basis weight of core material for the vacuum insulation panel. The fiberglass is derived from a fiberglass board for construction such that a fiberglass board for construction having a basis weight of about 500 g/m² to about 10,000 g/m², for example, a basis weight of about 500 g/m², about 1200 g/m², about 2500 g/m², or about 9600 g/m² may be used.

In addition, even though the binder incorporated in the fiberglass board for construction by a method for manufacturing a core material for vacuum insulation panel to be described later is removed, a core material for vacuum insulation panel having a thickness of about 25 mm, such as about 50 mm, or the like can be used.

According to some embodiments, in the fiberglass, the fiberglass content of vertical array may be higher than that of horizontal array. Typically, a core material for vacuum insulation panel comprises a lot of fiberglass horizontally arranged. For this reason, thermal bridges may be reduced, and therefore the low thermal conductivity can be secured.

However, although the present fiberglass is derived from a fiberglass board for construction and comprises more fiberglass vertically arranged, it can ensure the insulation performance over a certain level, and go for excellent cost competitiveness by using a fiberglass board for construction as it is.

### Method for manufacturing a core material for vacuum insulation panel

In another aspect of the present disclosure, provided is a method for manufacturing a core material for vacuum insulation panel, comprising: providing a fiberglass board, including a fiberglass with an average diameter of about 6 µm to about 10 µm; removing a binder by heat treating the fiberglass board; and removing the binder to form a core material for vacuum insulation panel comprising about 99% to about 100% by weight of a fiberglass and about 0% to 1% by weight of a carbonized binder.

According to some embodiments, the method for manufacturing a core material for vacuum insulation panel may include providing a fiberglass board, including a fiberglass with an average diameter of about 6 µm to about 10 µm. The fiberglass board for construction may be any type of fiberglass board known as fiberglass insulation materials for construction. For example, fiberglass wool may be used which comprises a fiberglass having an average diameter of about 6 µm and an organic binder including a phenolic resin of about 7% to about 10% by weight. In this embodiment, the fiberglass wool has a thickness of about 25 mm, and a basis weight of about 2000 g/m² in accordance with the architectural standard for fiberglass boards.

According to some embodiments, the method may include removing a binder by heat treating the fiberglass board. As used herein, the heat treating is referred to by heating a material at a predetermined temperature to improve the properties and characteristics of the material according to its cooling rate. Then, it is possible to remove the binder comprised in the fiberglass through the heat treatment. In this embodiment, by way of removing the binder, a core material for vacuum insulation panel comprising about 99% to about 100% by weight of fiberglass and about 0% to about 1% by weight of carbonized binder can be formed.

Further, although the binder is removed from the fiberglass board for construction, the volume and density of the fiberglass formed by comprising the binder can be maintained. Particularly, a fiberglass can be formed having a density of about 125 kg/m³ to about 500 kg/m³.

According to some embodiments, the heat treatment may be carried out by applying a press pressure of about 2.0 kg/cm² to about 2.4 kg/cm². Since the conventional fiberglass board for construction cannot but have a high volume during the manufacturing process, the density is very low. Therefore, the fiberglass is typically manufactured by compressing the volume of a fiberglass board for construction to at least about 60%. For this reason, a certain amount of press pressure is required to minimize the resiliency of the fiberglass after the binder is removed.

Therefore, in the process of heat treatment, by way of maintaining the press pressure in the above range, the volume of the fiberglass cannot be restored to its original state of the fiberglass board for construction, and each of the fiberglass can be evenly compressed to ensure at least certain level of thermal conductivity.

According to some embodiments, the heat treatment may be carried out at a temperature of about 300°C to about 450°C. A binder existed in a fiberglass board for construction can be removed through the heat treatment. The heat treating at a temperature within the above range is advantageous in that it can prevent damages to the fiberglass and the binder can be further evaporated.

### Vacuum insulation panel

In yet another aspect of the present disclosure, provided is a vacuum insulation panel comprising a core material for the vacuum insulation panel, which comprises 99% to 100% by weight of fiberglass and 0% to 1% by weight of carbonized binder.

Although the vacuum insulation panel may not contain a binder, it includes a core material for vacuum insulation panel comprising a fiberglass maintaining a constant density and an outer skin material for vacuum packaging the core material, and may further include a getter material attached to or embedded in the core material.

Moistures or gas may be generated inside the skin material due to a temperature change of the external environment. The getter material may be used to prevent the generation of moistures and gas, which includes calcium oxide (CaO) contained in a pouch.

The getter material may include a calcium oxide powder having a purity of 95% or more. The pouch may be formed of wrinkle paper and polypropylene (PP)-impregnated nonwoven fabrics such that the getter may have a moisture absorption rate of 25% or more. In this embodiment, the getter may have a thickness of 2 mm or less in consideration of the overall thickness of the insulation pad.

According to some embodiments, the vacuum insulation panel may comprise a skin material forming an encapsulant surrounding the core material for the vacuum insulation panel. Specifically, in the outer skin material, a metal barrier layer and a surface protective layer are sequentially stacked over a bonding layer. The bonding layer may be defined as a layer formed in the encapsulant, and the surface protective layer may be defined as a layer exposed to the outermost environment. In addition, the bonding layer is a layer thermally fused through heat sealing, and serves to maintain a vacuum state. Thus, the bonding layer may be formed of a thermoplastic plastic film comprised of at least one selected from the group consisting of high-density polyethylene (HDPE), low-density polyethylene (LDPE), linear low-density polyethylene (LLDPE), cast polypropylene (CPP), oriented polypropylene (OPP), polyvinylidene chloride (PVDC), polyvinyl chloride (PVC), ethylene vinyl acetate (EVA) copolymers, and ethylene vinyl alcohol (EVOH) copolymers, and may have a thickness of about 1 µm to about 100 µm to provide sufficient sealing properties.

Next, a metal thin film having a thickness of about 6 µm to about 7 µm is formed over the bonding layer as a barrier layer for blocking gas and protecting the core material. Generally, an aluminum foil is most widely used as a metal barrier layer. Since a thin film having a more excellent characteristic than the aluminum foil has not yet been clearly found, such aluminum foil can be employed in the present disclosure. Aluminum foil is a metal and may crack when folded. For this reason, surface protective layer may be formed on the metal barrier layer to prevent cracking.

According to some embodiments, the surface protective layer of the outer skin material may be formed into a laminated structure of a polyethylene terephtalate (PET) film having a thickness of about 10 µm to about 14 µm and a nylon film having a thickness of about 20 µm to about 30 µm. When serious cracking occurs in the metal barrier layer, the polyethylene terephthalate and nylon films can be damaged. In this embodiment, a layer of vinyl-based resin may be coated on the layer of polyethylene terephthalate to prevent such film damage.

The layer of vinyl-based resin may be formed of at least one vinyl-based resin selected from the group consisting of polyvinyl chloride (PVC), polyvinyl acetate (PVA), polyvinyl alcohol (PVAL), polyvinyl butyral (PVB), and polyvinylidene chloride (PVDC) resins. In addition, in order to improve sealing properties of the outer skin material, the surface protective layer, the metal barrier layer, and the bonding layer may be bonded to one another using polyurethane-based resin.

By forming the outer skin material in this way, the vacuum insulation panel may exhibit optimal sealing properties and long-term durability. Moreover, the vacuum insulation panel may be sealed using an outer skin material with a getter being attached to a surface of a core material for the vacuum insulation panel, or an outer skin material may be sealed with a getter being inserted into a core material for the vacuum insulation panel.

According to some embodiments, the thermal conductivity of the vacuum insulation panel may be about 2.5 mW/mK to about 4.5 mW/mK. The vacuum insulation panel comprises a core material formed of about 99% to about 100% by weight of a fiberglass and about 0% to about 1% by weight of a carbonized binder, exhibiting the thermal conductivity in the afore-defined ranges, thereby easily producing the insulation effect, and expanding the coverage as a vacuum insulation panel.

Hereinafter, the present disclosure will be described in more detail with reference to some specific examples thereof. However, the following examples are provided for illustration only and are not to be construed as limiting the present disclosure in any way.

### Examples and Comparative Examples

### Example 1

Three pieces of fiberglass board for construction having a size of 190 mm X 250 mm (length X width), a basis weight of 500 g/m², and a thickness of 25 mm were prepared. The board was heat-treated by elevating the temperature at a rate of 10°C/min at 400°C and maintaining the board under the press pressure of 2.0 kg/m², for 30 minutes. During this heat-treatment, the binder in the board was removed, whereby a core material for vacuum insulation panel was composed of 99% by weight of fiberglass and 1% by weight of carbonized binder, wherein the fiberglass board for construction comprised a fiberglass having an average diameter of about 6 µm, and a length of about 3 mm.

The core material for vacuum insulation panel was used as a core material. Then, an outer skin material having a laminate structure of a 12 µm thick polyvinylidene chloride (PVDC)/polyethylene terephthalate (PET) film, a 25 µm thick nylon film, a 7 µm thick aluminum foil, and a 50 µm thick linear low-density polyethylene (LLDPE) film was formed. Then, getter material manufactured by placing 25 g of calcium oxide (CaO) having a purity of 95% in a pouch was inserted into the core material. Then, the core material was sealed at a vacuum degree of 4 Pa after insertion into an encapsulant to afford the vacuum insulation panel according to the present disclosure.

The results of thermal conductivity of the vacuum insulation panel as measured using HC-074-600 instrument available from Eko Co., Ltd. are shown in Table 1 below.

### Example 2

A piece of fiberglass board for construction having a size of 190 mm X 250 mm (length X width), a basis weight of 2500 g/m², and a thickness of 25 mm was prepared. The board was heat-treated by elevating the temperature at a rate of 10°C/min at 380°C and maintaining the board under the press pressure of 2.4 kg/m², for 30 minutes. During this heat-treatment, the binder in the board was removed.

A vacuum insulation panel was manufactured in the same way as Example 1, except that a core material for vacuum insulation panel was composed of 99% by weight of fiberglass having a density of 500 kg/m³ and 1% by weight of carbonized binder, wherein the fiberglass board for construction comprised a fiberglass having an average diameter of about 6 µm, and a length of about 3 mm. The thermal conductivity of the vacuum insulation panel was measured.

### Comparative Example 1

A vacuum insulation panel was manufactured in the same way as Example 1, except that two or more layers of a fiberglass board in which a fiberglass having an average diameter of about 6 µm was collected with an organic binder were laminated to prepare a core material for the vacuum insulation panel, and this core material was used as a core material for the vacuum insulation panel. The thermal conductivity of the vacuum insulation panel was measured.

### Comparative Example 2

A vacuum insulation panel was manufactured in the same way as Example 1, except that at least one layer of a fiberglass board in which a fiberglass aggregate having an average diameter of about 6 µm was collected with an inorganic binder comprising silica was laminated to prepare a core material for the vacuum insulation panel, and this core material was used as a core material for the vacuum insulation panel. The thermal conductivity of the vacuum insulation panel was measured.

**Table 1**

| | Core material for vacuum insulation panel | | | | | Vacuum insulation panel |
|---|---|---|---|---|---|---|
| | Diameter of fiberglass (µm) | Length of fiberglass (mm) | Basis weight (g/m²) | Density (kg/m³) | Fiberglass content (wt%) | Initial thermal conductivity (mW/mK) |
| Example 1 | 6 | 3 | 500 | Binder removal 460 | 99 | 3.373 |
| Example 2 | 6 | 3 | 2500 | Binder removal 460 | 99 | 3.836 |
| C. Example 1 | 6 | 3 | 2400 | Organic binder 500 | 99 | 6.029 |
| C. Example 2 | 6 | 3 | - | Inorganic binder 500 | 99 | 4.501 |

Although the vacuum insulation panel according to the examples of the present disclosure was to remove the binder, the core material for vacuum insulation panel was used comprising a fiberglass which maintained constant amounts of a fiberglass and a binder carbonized under a heat treatment condition. In the working examples, the exemplary fiberglass comprises a less sophisticated fiberglass below the normal level than the fiberglass prepared in the comparative examples.

Referring to Table 1, although the core material for vacuum insulation panel in the working examples comprises the less sophisticated fiberglass below the normal level, the thermal conductivity of the vacuum insulation panel is comparable with the vacuum insulation panel in the comparative examples using a core material for vacuum insulation panel containing a normal level of fiberglass. In this regard, the vacuum insulation panels in the working examples were confirmed to produce the optimal thermal conductivity.

Accordingly, although the core material for vacuum insulation panel in the working examples contains a less sophisticated fiberglass below the normal level by way of the removal of the binder in the low-cost fiberglass board for construction through the heat treatment under a predetermined condition, the fiberglass having a density of about 125 kg/m³ to about 500 kg/m³ can be achieved, thereby obtaining the thermal insulation performance similar to those described in the comparative examples comprising a high-priced fiberglass.

Although some embodiments or examples of the core material for vacuum insulation panel with improved initial thermal insulation performance and long term durability have been disclosed hereinabove, it should be understood that the present disclosure is not limited thereto. Alternatively, various modifications can be made without departing from the scope of the present disclosure. That is, it will be understood by those skilled in the art that these embodiments or examples are provided for illustration only and various modifications, changes, alterations and equivalent embodiments or examples can be made without departing from the scope of the present disclosure. Therefore, the scope and sprit of the present disclosure should be defined only by the accompanying claims and equivalents thereof.

## Claims

1. A core material for vacuum insulation panel, comprising about 99% to about 100% by weight of a fiberglass and about 0% to 1% by weight of a carbonized binder.

2. The core material for vacuum insulation panel according to claim 1, the density of the fiberglass may be in a range of about 125kg/m³ to about 500 kg/m³.

3. The core material for vacuum insulation panel according to claim 1, the fiberglass has an average diameter of about 6 µm to about 10 µm.

4. The core material for vacuum insulation panel according to claim 1, the fiberglass has a fiberglass content of vertical array higher than that of horizontal array.

5. A method for manufacturing a core material for vacuum insulation panel, comprising:
providing a fiberglass board, including a fiberglass with an average diameter of about 6 µm to about 10 µm;
removing a binder by heat treating the fiberglass board; and
removing the binder to form a core material for vacuum insulation panel comprising about 99% to about 100% by weight of a fiberglass and about 0% to 1% by weight of a carbonized binder.

6. The method according to claim 5, the density of the fiberglass after removing the binder is in a range of about 125 kg/m³ to about 500 kg/m³.

7. The method according to claim 5, the heat treating is carried out by applying a press pressure of about 2.0 kg/cm² to about 2.4 kg/cm².

8. The method according to claim 5, the heat treating is carried out at a temperature of about 300°C to about 450°C.

9. A vacuum insulation panel comprising the core material for the vacuum insulation panel according to any one of claims 1 to 4.

10. The vacuum insulation panel according to claim 9, the thermal conductivity of the vacuum insulation panel is in a range of about 2.5mW/mK to about 4.5 mW/mK.
